# EUROPEAN PATENT SPECIFICATION

(11) **EP 4 587 257 B1**
(45) Date of publication and mention of the grant of the patent: **29.04.2026**
(21) Application number: 23806039.6
(22) Date of filing: 03.11.2023
(51) Int. Cl.: B29C 64/218, B33Y 40/00, B08B 1/34, B33Y 30/00, B33Y 10/00, B29C 64/35, B22F 12/63, B08B 1/00

(54) **APPARATUS FOR LAYERWISE MANUFACTURE OF 3D OBJECTS AND METHOD OF OPERATION**
VORRICHTUNG ZUR SCHICHTWEISEN HERSTELLUNG VON 3D-OBJEKTEN UND VERFAHREN ZUM BETRIEB
APPAREIL DE FABRICATION PAR COUCHES D'OBJETS 3D ET PROCÉDÉ DE FONCTIONNEMENT

(30) Priority: 22.11.2022 GB 202217427
(43) Date of publication of application: 23.07.2025
(73) Proprietor: Stratasys Powder Production Ltd, Nottingham NG7 2RQ (GB)
(72) Inventor: BAK, Simon, Nottingham NG7 2RQ (GB); GARRIDO BARRABES, Marcel, Nottingham NG7 2RQ (GB); HARTMANN, Anders, Nottingham NG7 2RQ (GB); NIELS-CHRISTIANSEN, Hans, Nottingham NG7 2RQ (GB)
(74) Representative: Mathys & Squire
(86) International application number: PCT/GB2023/052881
(87) International publication number: WO 2024/110739

(56) References cited:
- WO-A1-2020/237142
- US-A1- 2008 226 335

## Description

### FIELD OF THE INVENTION

The present disclosure relates to apparatus for the layerwise manufacture of three-dimensional (3D) objects from build material and a method of operation thereof, whereby the build material is distributed by a roller.

### BACKGROUND

In applications for forming 3D objects layer by layer from particulate build material, such as binder jet, or powder bed fusion applications like "print and sinter" and laser sinter applications, an object is formed layer-by-layer from build material spread in successive layers across a support. An area within each successive layer is consolidated, by adhering together/curing or melting the build material over that area, in order to form a cross section of the 3D object. The build material may for example be distributed by a doctor blade, an overhead hopper, or a roller passed over the build area to form each new layer. A roller may be advantageously used to both distribute the build material without significantly compacting it while providing a layer of uniform thickness by being passed over the build support while rotating in a counter rotating sense. It has been found that despite various counter measures, a build-up of static combined with fine light particles causes build material to collect on the roller surface. This can lead to an effectively uneven roller surface and therefore a layer of non-uniform thickness, or even local compaction of build material. Conventional cleaning devices are brushes and blades contacting the roller surface to remove such build-up of build material. However, the use of blades has its own challenges and can cause degradation of one of the contacting surfaces of the blade and/or the roller, need to be stiff and straight to ensure continuous contact along the roller surface which makes them expensive to manufacture and prone to failure, and brushes may shed bristles that end up in the particulate material layer. Therefore, a more reliable cleaning device and method of use are needed that are simple and inexpensive to implement to ensure the distribution of highly uniform layers.

Background art is provided in WO 2020/237142 A1 and US 2008/226335 A1.

WO 2020/237142 A1 discloses a recoat assembly for an additive manufacturing system, wherein the recoat assembly includes: a base member that is movable in a lateral direction; a powder spreading member coupled to the base member, wherein the base member at least partially encapsulates the powder spreading member; and a vacuum in fluid communication with at least a portion of the base member.

US 2008/226335 A1 discloses an image transfer device for a sheet-fed image reproduction system in which removal of contaminants from the surface of an image transfer member is possible by using a tacky surface cleaning member contacting the image transfer member surface.

### SUMMARY

Aspects of the invention are set out in the appended independent claims, while particular embodiments of the invention are set out in the appended dependent claims.

The following disclosure describes, in an aspect, an apparatus for the layer by layer manufacture of a 3D object from particulate material according to claim 1. A method of operation of the apparatus according to claim 12 is also described.

### BRIEF DESCRIPTION OF THE DRAWINGS

Reference is now directed to the drawings, in which:
Fig. 1 is a schematic cross-section of a side view of part of an apparatus for the layerwise manufacture of 3D objects from particulate build material, comprising a cleaning device according to the invention travelling with a roller;
Fig. 2 is a variant of Fig. 1 in which the cleaning device according to the invention is arranged stationary to intermittently engage with the roller;
Fig. 3A is a schematic cross-section of a side view of the roller and cleaning device according to a variant of the cleaning device of Fig. 1 or Fig. 2;
Fig. 3B illustrates the roller and cleaning device of Fig. 3A in operation;
Fig. 4 and Fig. 5 illustrate two further variants of the cleaning device of Fig. 1 or Fig. 2;
Fig. 6A and Fig. 6B illustrate respectively a schematic cross-section of a side view and a front view of a further variant of the cleaning device according to Fig. 1 or Fig. 2;
Fig. 7 is a schematic illustration of a further variant of a cleaning device formed from a mesh with different-sized perforations;
Figs. 8A to 8C illustrate use of the stationary cleaning device of Fig. 2 intermittently contactable against the roller surface;
Fig. 9 is a further variant of the cleaning device of Fig. 1 or Fig. 2;
Fig. 10 is a schematic cross-section of a side view of components of a powder bed fusion apparatus comprising the cleaning device according to the invention; and
Fig. 11 is a flow chart illustrating a method of cleaning a roller using a cleaning device according to the invention.

In the drawings, like elements are indicated by like reference numerals throughout.

### DETAILED DESCRIPTION

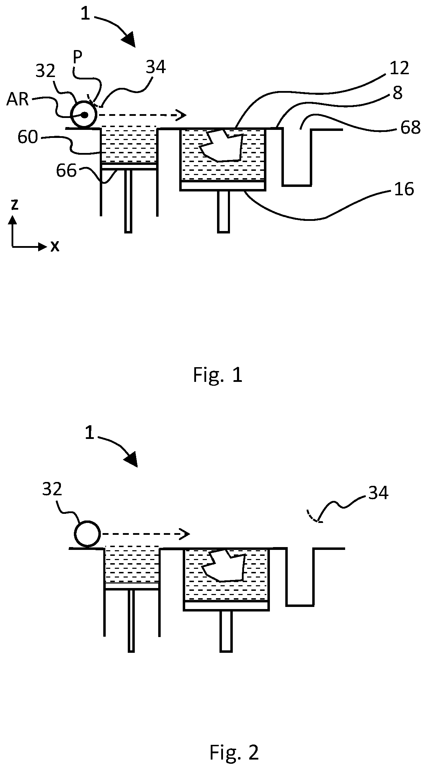

The cleaning device according to the invention, several variants and how they may be arranged and used within a powder bed apparatus will now be described with reference to Figs. 1 to 11.

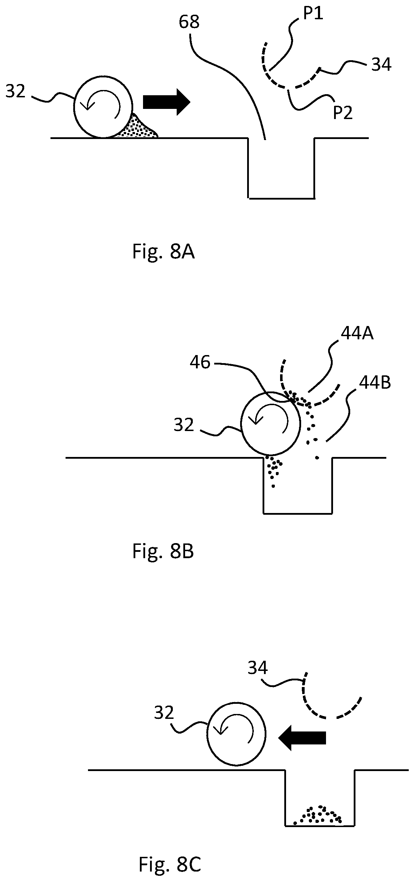

To illustrate first how the cleaning device may be arranged within the apparatus, Figs. 1 and 2 schematically illustrate a cross-section of a side view of part of an apparatus for the layerwise manufacture of 3D objects from particulate build material, comprising the cleaning device according to the invention. Fig. 1 illustrates a variant in which the cleaning device moves with a roller and may contact the roller continuously or intermittently. In Fig. 2, in which features identical to those of Fig. 1 are unlabelled for simplicity, the cleaning device does not move with the roller but is instead located stationary to one side of the build area. Applying equally to both Figures, the apparatus 1 comprises a build area 12 within a work surface 8 and over which the one or more 3D objects are to be built, wherein the build area 12 represents the surface of the topmost layer, wherein the apparatus comprises a dosing device 60 configured to provide an amount of build material to the work surface 8; a roller 32 configured to pass over the build area 12 while rotating about an axis of rotation AR to distribute the dosed amount of the build material over the build area 12 to form a layer, the axis of rotation AR being perpendicular (along y) to the direction of distribution (along x, indicated by the dashed arrow); and a cleaning device 34 comprising a cleaning portion extending parallel to the axis of rotation AR, wherein the cleaning device 34 comprises a plurality of perforations P comprised at least within the cleaning portion, the perforations extending from a cleaning surface 46 of the cleaning portion to an opposite surface opposite the cleaning surface through the cleaning portion, wherein the cleaning surface is configured to at least intermittently engage against the roller surface while the roller rotates, and wherein the perforations P are configured to allow build material to pass from the roller 32 through the cleaning portion to the opposite surface while the cleaning surface is in engagement with the roller surface as the roller rotates about the axis of rotation AR. In Fig. 1, the roller is in engagement with the cleaning surface of the cleaning device for at least some of its pass over the build area 12. In Fig. 2, the cleaning device 34 is arranged stationary to a side of the build area 12 opposite of the dosing device 60 and above the receiving chamber 68 and arranged such that the roller may engage against it at the end of its pass. This will be further described below with reference to Figs. 8A to 8C.

In Figs. 1 and 2, the apparatus comprises a dosing device in the form of a feed bed 60, in which a supply of build material is lifted layer by layer by a piston 66 before being distributed by the roller 32. Other dosing devices are well known and equally suitable. In a typical build phase for the layerwise formation of a 3D object from build material, successive layers of build material are distributed over a piston 16 supporting the build area 12, which is processed to selectively consolidate build material and form successive crosssections of an object 2. In this context, each newly distributed layer forms a new build area 12 that is the build area of the layer to be processed in that particular layer cycle. The roller 32 may push a surplus portion of build material not used for forming the new layer into a receiving chamber 68 on the opposite side of the build area 12 with respect to the dosing device 60. The receiving chamber may be a waste chamber as illustratively shown herein, or it may be configured to return the build material it receives back to a dosing chamber in some apparatus not having a dosing module in the form of a feedbed 60.

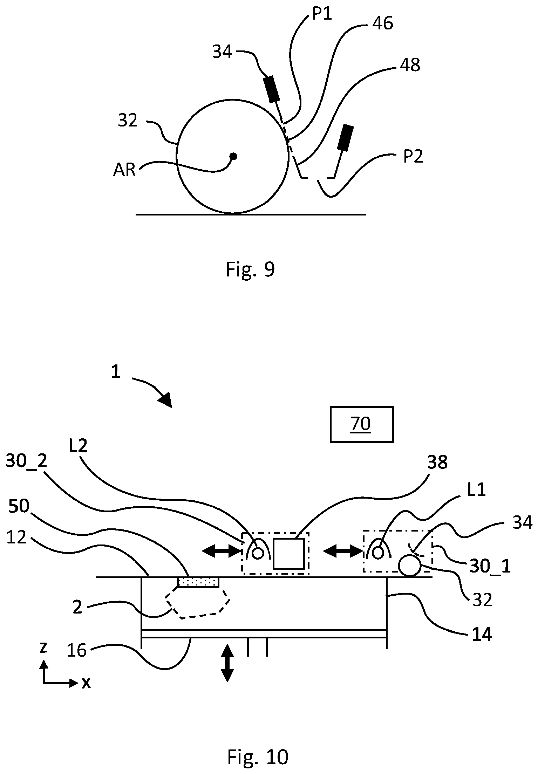

For illustrative purposes, the layerwise formation of an object by a powder bed fusion apparatus will now be illustrated in Fig. 10 with reference to a "print and fuse" apparatus. Such apparatus may comprise the roller 32, a deposition module 38 for selectively depositing absorption modifier to define a layer-specific region 50 within the build area 12, and a heating module comprising a heat source L1 to achieve selective heating of the layer-specific region 50. The layer-specific region 50 represents a cross section of an object 2 and indicates that its position, shape and pattern is layer dependent. The modules may be provided on one or more carriages moveable across the layer. In the apparatus of Fig. 10, two carriages 30_1 and 30_2 are shown. The carriages in this example are arranged to pass back and forth over the build area 12 along a first direction, e.g. along x, and along a second direction opposite the first direction. In other variants of the apparatus, the carriages may move in directions orthogonal to one another. The first carriage 30_1 in this variant comprises the roller 32 and the cleaning device 34, which in this example moves together with the roller. Both roller and cleaning device may be coupled to the first carriage 30_1. The second carriage 30_2 comprises the deposition module 38, such as a droplet deposition module configured to deposit the absorption modifier in the form of fluid droplets. Mounted behind the deposition module 38, with respect to the first direction, is a fusing heat source L2. The build bed 14 is supported on a piston 16, which is arranged to move vertically to lower or raise the build area 12. The distribution, deposition and heating modules may span the width of the build area 12 (along y) so as to process each layer in a single pass or "stroke". The x-axis is herein also referred to as the length of the build area 12, the length being perpendicular to the width, however reference to length and width is not intended to indicate relative extent of the two directions but to merely help reference directions of the process.

The absorption modifier may be radiation absorber deposited over the layer-specific region 50, and/or absorption inhibitor deposited over a surrounding area surrounding the layer specific region 50. In binder jet apparatus, a binder fluid is deposited. Consolidation of the build material within the layer specific region is achieved by irradiating the layer specific region with a suitable wavelength; where the fluid is infrared radiation absorber, the heat source L2 is arranged to radiate with a spectrum absorbed to a higher degree by the radiation absorber compared to the surrounding area. If the combination of absorber and power input to the heat source L2 (causing a certain energy input to the region 50) is sufficient, the build material of the layer specific region 50 melts to form a region of consolidated build material. A further heat source, such as a preheat source L2, may be provided behind the roller 32 to immediately preheat the freshly distributed build material further, to a temperature close to the melting layer temperature. When using a binder fluid, ultraviolet radiation may be used to cross link the binder fluid to bind the build material together.

In such powder bed processes, a fine layer of build material may adhere to the roller surface while the roller distributes the dosed amount over the build area. Build up of the fine layer can rapidly lead to non-uniform distribution and uneven layer thicknesses, leading to poor object quality. The roller surface thus requires cleaning to ensure a process reliability. Conventionally, a scraper or brush may be used. However, the scraper may wear the surface of the roller, and requires to be a high precision component to ensure straightness and consistent engagement. A brush meanwhile may wear and shed bristles which can end up in the build material layer and cause reliability issues. The cleaning device 34 according to the invention disclosed herein is an improvement over known cleaning devices and may apply to any powder bed apparatus in which a roller is used to distribute build material to form a layer, including a binder jet apparatus or powder bed fusion apparatus using a laser or an infrared heat source to consolidate the build material over defined cross sections.

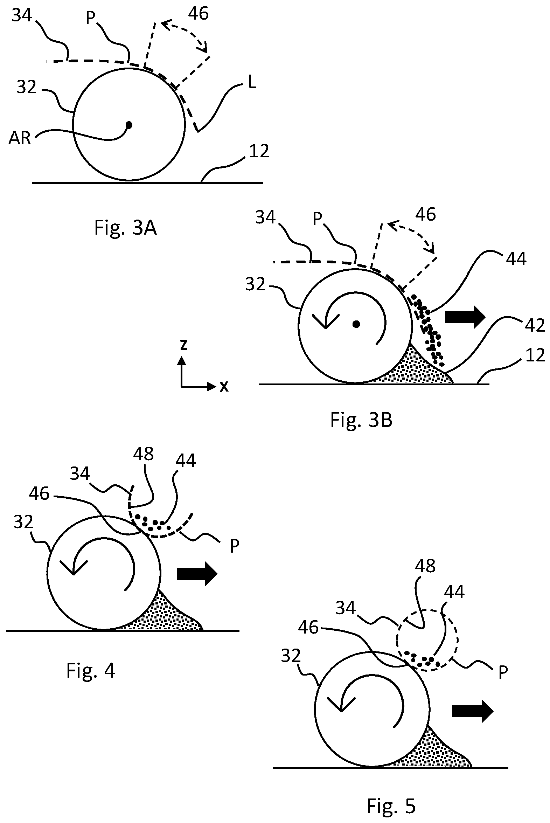

Variants of the cleaning device and methods of using it during operation of the apparatus 1 will now be described with reference to Figs. 3A to 11.

Fig. 3A schematically illustrates a side view of a roller 32 having an axis of rotation AR and a cleaning device 34. Fig. 3B shows the same side view in use. Not all of the labels of Fig. 3A are shown in Fig. 3B but apply equally. In the variant shown in Fig. 3A, the cleaning device 34 may be mounted alongside, or in correspondence with, the roller 32 and comprises a surface at least partially formed of a mesh sheet having a plurality of perforations. In this example, the cleaning device 34 comprises a resilient planar mesh sheet comprising a cleaning portion contacting the roller surface along the length of the roller (along the axis of rotation). The sheet comprises a lower, leading edge to one side the cleaning surface towards the direction of travel, wherein the upper edge to the other side of the cleaning surface 46 may be fixedly mounted to a support and the cleaning surface has a stiffness selected so as resiliently engage with the roller surface along part of the circumference of the roller surface. The mesh may be of a suitable stiffness to partially conform to the surface of the roller, with its cleaning surface 46 conforming over a portion of the circumference of the roller 32, while retaining the ability to return to its original shape when disengaged from the roller surface; i.e. substantially without becoming permanently deformed. The cleaning surface 46 may preferably contact the roller over an upper portion of the roller surface, or above the level of the axis of rotation. The leading edge of the mesh, lower edge L, represents a release portion pointing downwards towards the build area 12. In operation, shown in Fig. 3B, the roller 32 moves along the direction of the arrow during its pass to distribute at least part of the dosed amount 42 in the form of a layer over the build bed 12. The roller may be counter rotating about the axis of rotation AR as indicated by the circular arrow. In this variant, the cleaning device 34 is travelling with the roller 32 while the cleaning portion having a cleaning surface 46 with perforations P larger than a particle size of the build material is in contact with the roller surface. As the roller travels over the build area 12, some of the build material 44 of the dosed amount adheres to its surface. This adhered build material passes with the roller surface towards the cleaning portion of the cleaning device 34, where it passes through one or more of the perforations P of the cleaning surface onto the opposite surface 48 of the mesh opposing the cleaning surface. Following this, it falls downwards over the release portion and over the lower edge L onto the build area 12 ahead of the roller. This allows the build material falling over the lower edge L to be distributed with the dosed amount.

The cleaning portion may thus be adjacent and coupled to a release portion of the cleaning device; the release portion may be arranged to tilt downwards towards the build area 12. The release portion may be at least partially open towards the build area. Preferably, the cleaning portion and release portion are mounted upstream with respect to the roller surface along the direction of distribution, such that the build material on the opposite surface 48 flows downwards towards the release portion, and from the release portion onto the build area 12 ahead of the roller 32, such that the build material from the opposite surface may be distributed with the dosed amount. In the variant of Fig. 3B, the cleaning surface 46 contacts the roller surface upstream of its pass, and is adjacent to a downwards tilting surface that allows the build material passed through the perforations P to the opposite surface 48 to flow downwards over the mesh, for example purely by gravity, towards and over the lower edge of the mesh and onto the build area 12 ahead of the roller 32. In this way, the build material removed from the roller may be reused easily by being distributed together with the dosed amount 42. In this way, no additional processing of the build material removed from the roller surface is necessary.

The cleaning surface 46 may be configured to resiliently engage with part of the roller surface while the roller rotates, for example, over part of the roller circumference as shown, wherein the properties of the cleaning portion are preferably chosen such that the cleaning portion is sufficiently elastic to engage with the roller surface over the length of the roller and such that it does not undergo plastic deformation while being urged against the roller surface. For example, this may be preferable where some or all of the cleaning portion deforms elastically to conform to the roller surface over a part of the roller circumference to define the cleaning area over which build material may pass from the roller surface to the opposite surface. When the cleaning portion is removed from the roller surface, it preferably returns to its original shape. It thus has a resilient property that allows it to confirm without plastic, or permanent, deformation. The cleaning surface 46 over which the cleaning device 34 interacts with the roller surface may be determined by selecting a suitable stiffness of cleaning mesh. In variants, the cleaning portion and the release portion may be part of a sheet having a stiffness, and the lower edge L of the release portion may comprise or be fitted with a mass, wherein the stiffness and the mass are selected such that the cleaning surface is resiliently urged against the roller surface and cause it to conform over part of the circumference of the roller surface, and so as to provide a slope of the release portion towards the build area 12. Optionally, the upper edge of the mesh may be resiliently mounted to the carriage via for example a spring. By selecting the stiffness of the mesh and the force by which it is held against the roller surface, the cleaning surface of the mesh may reliably conform and contact the roller surface to provide reliable cleaning.

It is not essential that the cleaning surface 46 is of or conforms to a similar shape to part of the circumference of the roller surface as shown in Figs. 3A and 3B. Instead, the cleaning surface may be part of a non-conformal surface, as shown in Figs. 4A to 6. In these three variants, the cleaning device comprises a cleaning surface that is part of a surface curving away from the roller surface and contacts the roller surface over a shorter region of the circumference, or over substantially a contact line, extending along the length of the roller axis AR. Fig. 4 illustrates a variant in which the cleaning device 34 comprises a trough-shaped mesh having perforations P along at least a contact line 46 over which the mesh contacts the roller surface. In this variant, the build material 44 passes from the roller surface through the perforations P and is held on the opposite surface 48. In this variant, the mesh is not configured to release the build material 44 ahead of the roller so as to allow it to fall onto the build area in front of the roller to be distributed with the dosed amount 42. Instead, it may be removed in other ways - for example the cleaning device may be periodically swivelled upside down to release the collected build material 44 into the receiving chamber 68 at the end of each stroke. Like the variant of Fig. 3, the cleaning device may be held statically against the roller surface for the duration of the stroke over the build area.

In another variant illustrated in Fig. 5, the cleaning device 34 may comprise an elongate hollow cylinder, wherein the outer surface of the hollow cylinder comprises the cleaning surface 46 and the inner surface of the hollow cylinder comprises the opposite surface 48; and wherein the cleaning surface 46 is arranged to extend along the length of the roller. The cleaning portion may comprise a mesh wall that extends along the length of the roller 32 such that its surface contacts the roller along the entire length of the roller. As for the cleaning device of Fig. 4, the build material passes from the roller surface through the perforations P along the contact region 46 into the hollow interior of the cylinder and remains on the opposite surface 48 of the cleaning portion. One of the ends of the hollow cylinder may be provided with an aperture through which the build material that passed through the perforations P to the opposite surface (interior surface) 48 may be removed. For example, at the end of each stroke, the cylinder may be temporarily disengaged from the roller surface, tilted with the apertured end towards the work surface to allow the build material to flow out of the interior of the hollow cylinder, and moved back to re-engage the cleaning surface with the roller surface. The cleaning device may be configured such that during disengagement and tilting the apertured end points towards the receiving chamber 68 shown in Fig. 1 or Fig. 2.

The cleaning surface 46 may therefore be part of an elongate "trough" or hollow elongate cylinder arranged to contact the roller surface along at least a contact line of the cleaning portion parallel to the axis of rotation AR and extending along the length of the roller 32. Where the mesh is sufficiently flexible, it may be urged against the roller surface to conform with its cleaning portion over a circumferential region of the roller surface.

For the variants of Figs. 3A, 3B and 4, the cleaning surface may be statically engaged with the roller surface while the roller rotates about its axis of rotation AR. This may lead to frictional wear or either of both surfaces. The perforations may only be present over the cleaning surface and not over the remaining surface of the cleaning device, for example where the cleaning region is part of a thin planar sheet that is not perforated apart from the cleaning surface 46. In the variant of Fig. 5, the cleaning device may similarly travel with the roller and the cleaning surface may be engaged with the roller surface while the roller rotates about its axis of rotation AR. To improve the effectiveness of the build material passing from the roller surface through the perforations P, the hollow cylinder may be actively rotated in the same sense as the roller. Alternatively, the hollow cylinder may be rotated, or may be allowed to rotate as result of friction, in a counter sense to the rotation of the roller so as to reduce wear of the surfaces. For rotating cleaning devices, the perforations P may be provided over the entirety of a mesh surface of the hollow cylinder, such that the cleaning surface 46 is represented by a continuously changing, or progressing, region along the mesh surface of the cleaning device 34.

The perforations P may not all be of the same size but may be of one or more different sizes. For example, the cleaning portion may comprise a first group of perforations P1 smaller than one or more larger perforations P2 comprised within the release portion adjacent to and coupled to the cleaning portion, wherein the one or more larger perforations P2 are arranged to release build material from the opposite surface 48 away from the cleaning device 34. The second size of larger perforations may allow the efficient release of build material from the opposite surface 48.

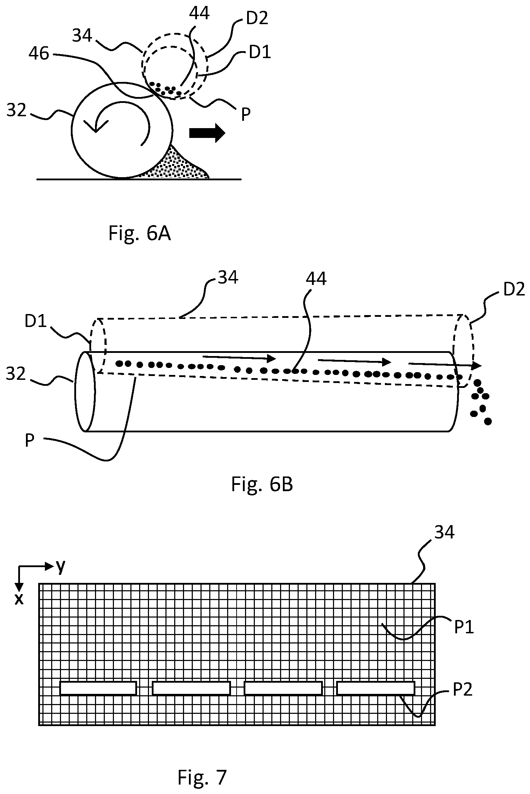

Fig. 7 illustrates a mesh sheet for the cleaning device 34, the sheet comprising a regular mesh of square first perforations P1 of a first size, for example of the order of and larger than the particle size of the build material, and a series of elongate slots P2 with a second perforation size larger than the first size arranged over a release portion of the cleaning device. These larger perforations P2 may act as release perforations to release the build material from the opposite surface 48 and away from the cleaning device 34. The sheet may be held in a curved form to provide the cleaning surface 46 of the cleaning device 34 of Fig. 4, or rolled up to form the hollow cylinder of Fig. 5, such that the axis of curvature is parallel to the elongate or length direction along y. In these variants, the cleaning surface 46 may be held statically against the roller as the roller rotates, with the larger perforations P2 arranged to face towards the build area 12 and with the cleaning surface 46 comprising at least some of the smaller perforations P1. The direction of elongation of the slots P2 may extend substantially along the axis of rotation and the release portion may be arranged so as to not contact the roller surface. The larger release perforations P2 may be arranged lower along a downward curved surface in relation to the cleaning surface 46, such that the build material passes from the roller surface through the smaller perforations P1 to the opposite surface 48, and flows by gravity towards and through the larger release perforations P2 and onto the build area 12 ahead of the roller. This variant applied during the pass of the roller 32 may allow the build material on the opposite surface 48 to be reused immediately for distribution on the build area 12 along with the dosed amount 42. Alternatively, the larger release perforations P2 may be facing in a forward direction with respect to the direction of the roller movement, or in an upward direction in the case of the variant of Fig. 5, and may be rotated to face the receiving chamber 68 at the end of each stroke to release the build material on the opposite surface 48 into the receiving chamber 68. In variants of Fig. 5 in which the hollow cylinder of the cleaning device 34 rotates, the rotation may cause build material to pass from the roller surface to the interior surface 48 through the smaller and larger perforations, while allowing the build material on the interior surface to flow out of the larger perforations each time they are oriented downwards towards the build area 12 during their rotation. Thus, a first group of perforations P1 may be at least partially comprised within the cleaning surface 46 and second one or more larger perforations P2 may be arranged such that in use, build material collected on the opposite surface 48 freely falls through the one or more larger perforations P2. The one or more larger perforations P2 may be arranged not to contact the roller surface. The second one or more larger perforations P2 may be one or more elongate slots, wherein the direction of elongation extends substantially parallel along the axis of rotation AR. Alternatively, the second perforations P2 may be larger perforations of the same or different shape to that of the first smaller group of perforations P1. Herein, the size of the perforations P refers to the aperture area of the perforations, where the smallest width of each aperture is larger than the average particle size of the build material. The largest aperture size may be chosen so as to prevent uncontrolled release of the build material on the opposite surface 48 falling back out through the perforations of the cleaning portion. An advantage of using a cleaning portion having an opposite surface 48, rather than a brush or sponge material, is that the build material may pass through the perforations and be moved along and away from the opposite surface 48 without being held within the cleaning device, thus reducing maintenance of the cleaning device.

The cleaning surface 46 may be formed by a flexible mesh and be of a thickness such that the mesh conforms to a portion of the curvature of the roller surface, such that the cleaning surface 46 spans an arc portion of the circumference of the roller surface. The mesh may be a fabric or weave having suitably sized perforations P that allow the build material particles to freely pass from the cleaning surface 46 through the cleaning portion to the opposite surface 48. The material of the cleaning portion or the cleaning device may be selected based on for example the desired flexibility or stiffness at a desired thickness of the mesh, and/or based on the material of the roller surface so as to reduce wear. For example, the mesh may be formed of metal such as stainless steel or plastic such as nylon with perforations of smallest aperture size larger than the average or maximum particle size of the build material. For example, for a PA11 nylon material with an average particle size of 100-130 µm, the mesh may have perforations P with a smallest feature size (smallest diameter or aperture width) of 150 µm, and a largest feature size of for example 500 µm. A stainless steel or plastic mesh with square shaped perforations of 250 µm, a 0.1 mm diameter thread and an open area of around 50% have been tested with good results for PA11 build material and a stainless steel roller. The choice of the material and perforation size and shape may depend further on the flowability of the build material.

The size of the larger apertures P2 configured to release the build material away from the opposite surface 48 may be chosen such that the build material freely flows through the larger apertures P2. The size may be selected in combination with agitating the build material on the opposite surface 46 to maintain it in a freely flowing state, for example by vibrating or rotating the cleaning surface 46 and/or the mesh, such as the perforated cylinder, of the cleaning device 34. Figs. 6A and 6B illustrates a further variant of a cleaning device 34 comprising a hollow conical cylinder extending along the length of the roller. The hollow conical cylinder is arranged to be brought in contact with the roller surface over at least a cleaning portion, the cleaning portion comprising the cleaning surface 46 over which the hollow cylinder comprises perforations P. The cylinder has two ends, one of a smaller diameter D1 and the other of a larger diameter D2. The second end is at least partially open. As the roller 32 rotates while engaged with the cleaning surface of the hollow cylinder, build material 44 passes from the roller surface to the inside of the conical hollow cylinder through perforations P and flows along the length of the downwards sloping surface towards the second end of larger diameter D2, and falls out of the hollow cylinder and onto the work surface 8 adjacent the build area 12. The apparatus 1 may comprise a groove in the work surface alongside the build area to accommodate the build material 44 so as to avoid a build-up that may interfere with the movement of the carriages.

As described above, the cleaning device 34 may be configured to be moveable in correspondence with the roller 32 and the cleaning surface 46 may be in contact with the roller for at least some, or all, of the duration of the pass over the build area 12. Alternatively, the work surface may comprise a receiving chamber arranged to a side of the build area and located at the end of the pass of the roller 32 to an end side of the build area 12 following distribution, wherein the cleaning device 34 is arranged above the receiving chamber 68 and wherein the roller is configured to abut while rotating against the cleaning surface 46 at the end of its pass over the build area 12, wherein the cleaning device is configured to release the build material on the opposite surface 48 into the receiving chamber 68. The release portion may be of any suitable arrangement discussed herein. This is further illustrated in Figs. 8A to 8C, showing, in Fig. 8A, the roller 32 approaching the end of its stroke and moving towards the receiving chamber 68. The cleaning device 34 is statically mounted above the receiving chamber 68 and comprises perforations of a smaller size P1 and one or more larger perforations P2 facing towards the receiving chamber 68 below. The cleaning device may for example be in the form of the mesh of Fig. 7 that is curved to form a trough with an open end facing away from the receiving chamber; however any of the other variants of the cleaning device described or envisaged may be suitable. At the end of its pass, the roller 32 may push any excess build material ahead of it into the receiving chamber 68, and abut against the cleaning surface 46 of the cleaning device 34. This is shown in Fig. 8B. While in abutment with the cleaning surface 46 of the cleaning portion, the roller continues rotating about the axis of rotation AR, causing build material to pass from the roller surface through the smaller perforations P1, and to flow towards the one or more larger perforations P2, for example by gravity, and fall out of the one or more larger perforations P2 into the receiving chamber 68. Next, the roller disengages from the cleaning surface and moves in the opposite direction back to its starting position. In this example of Fig. 8C, the roller does not distribute build material along the opposite direction of the pass, although in other variants of the apparatus this is optional.

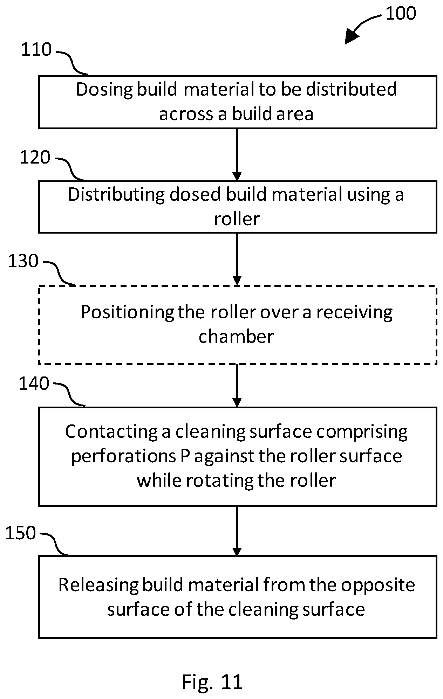

A method 100 of applying the cleaning device 34 and its variants according to the disclosures herein may be represented by the flowchart of Fig. 11, comprising: at block 110, dosing build material to be distributed across the build area 12; at block 120, distributing the dosed amount over the build area 12 by passing the roller 32 over the build area 12 while rotating the roller 32 about an axis of rotation AR perpendicular to the direction of distribution; at block 14, engaging a cleaning surface 46 of the cleaning portion, the cleaning surface 46 extending parallel to the axis of rotation AR, against the roller surface at least intermittently, wherein the cleaning portion comprises a plurality of perforations P extending from the cleaning surface 46 to an opposite surface 48 of the cleaning portion, thus allowing build material adhered to the roller surface to pass from the cleaning surface to the opposite surface so as to clean the roller surface; and at block 150, releasing the build material from the opposite surface 48 of the cleaning portion. The step at block 140 may comprise passing the cleaning device 34 with the roller 32 across the build area 12 and engaging a cleaning device 34 against the roller surface intermittently or continuously. Alternatively, the cleaning device may be provided stationary to a side of the build area 12 at the end of the pass of the roller, for example above a receiving chamber 68, and engages with the roller 32 at the end of its stroke, for example at the end of each stroke or after a number of strokes, as may be predefined. This is illustrated by the optional block 130, in dashed outline, where the roller is positioned over the receiving chamber 68 before coming into contact with the cleaning portion of the cleaning device 34.

The cleaning portion may be part of an elongate hollow cylinder extending along the length of the roller, as illustrated in Fig. 5 or Figs. 6A and 6B, and the method may further comprise rotating the elongate hollow cylinder so as to agitate the build material on the opposite surface 48 of the cleaning portion (inner surface of the hollow cylinder) and to release the build material through an open end of the hollow cylinder. Where the cleaning portion is part of a trough-shaped cleaning device comprising a release portion coupled to and closer to the build area than the cleaning portion, such as shown in Figs. 4 and 9, the release portion may comprise one or more release openings, and the method may further comprise engaging the cleaning surface 46 against the roller surface upstream of the direction of distribution, releasing the build material from the opposite surface 48 through the one or more release openings onto the build area 12 ahead of the roller, and distributing the released build material with the dosed amount.

In variants, block 140 may comprise engaging the cleaning surface 46 against the roller surface for the duration of the step of distributing the dosed amount over the build area at block 120.

In apparatus in which the work surface comprises a receiving chamber 68 arranged to a side of the build area 12 and located at the end of the pass of the roller 32 to an end side of the build area following distribution, wherein the cleaning device 34 is arranged above the receiving chamber, the step at block 140 of engaging the cleaning surface 46 comprises abutting while rotating the roller 32 against the cleaning surface 46 so as to intermittently engage the cleaning surface 46 against the roller surface; and wherein the method may further comprise releasing the build material on the opposite surface 48 into the receiving chamber 68 through one or more openings of a release portion of the cleaning device 34, wherein the one or more release openings face the receiving chamber 68; and returning the roller 32 to the opposite side of the build area 12 with respect to the receiving chamber 68.

In variants, an optical sensor may be used to detect an amount of build material on the roller surface and to determine whether the roller requires cleaning. The cleaning device 34 may be engaged with the roller 32 based on a determination that the roller surface requires cleaning. This may prevent wear of the roller and/or cleaning surface. The cleaning device 34 may comprise a cleaning surface 46, the cleaning surface 46 extending along the length of the roller parallel to the axis of rotation AR and comprising a plurality of perforations.

While in contact with the roller as the roller rotates, build material adhered to the roller surface passes from the roller surface through at least some of the perforations P1 located along a cleaning surface 46 over which the cleaning device engages with the roller surface. Where the cleaning surface 46 does not extend along the length of the roller, the cleaning surface may be translated along the roller surface while being engaged with the roller surface as the roller rotates so as to clean the roller along its length. The step at block 150 of releasing the build material may not be sequential and may not be carried out continuously - for example the step may be carried out intermittently as required, for example at the end of each pass of the roller at block 120, or after a certain number of passes at block 120 and/or steps at block 140. In other variants, the step at block 150 may occur concurrently, for example using one of the implementations in Figs. 3A, 3B, 6A, 6B or 9, in which the cleaning device travels with the roller and is arranged to release build material continuously.

The cleaning surface 46 may be intermittently disengaged from the roller and the cleaning device may be tilted to allow build material 44 on the opposite surface 48 to fall onto the build area 12 ahead of the roller or into a receiving chamber arranged at the end of the pass within the work surface 8. Similarly, where the cleaning device is arranged stationary above the receiving chamber, the cleaning device may be rotated to a position in which larger perforations P2, provided over a release portion of the cleaning device coupled to the cleaning portion, face the receiving chamber 68 to release the build material from the opposite surface 46 via the release portion. Where the cleaning surface 46 is part of the outer surface of a hollow cylinder, the cleaning method may comprise rotating the cylinder so as to agitate and move the build material along the inner surface of the hollow cylinder. Furthermore, the method may comprise rotating or counter-rotating the hollow cylinder of the cleaning device against the roller surface.

In any of the above variants, the cleaning surface 46 may not be flexible and/or be part of a continuous mesh. Any of the static cleaning devices may be implemented by providing a stiff mesh comprising the cleaning surface 46. Fig. 9 illustrates a compound cleaning device in which three planar surfaces are joined to one another to form a trough. The device provides a first planar surface comprising the cleaning surface 46 which comprises cleaning perforations P1 and is urged against the roller surface when cleaning is to be performed. A second surface arranged with one or more larger, release perforations P2 is joined to the first surface, and a third retaining surface is joined to the second surface opposite the first surface to retain the build material that passes through the smaller cleaning perforations such that it can only fall through the larger release perforations P2. In this example, the surface comprising the release perforations P2 is also planar and substantially horizontal so as to be parallel with the build area 12. The cleaning surface 46 may be flexible and comprised within a planar sheet that is stiff and does not deform. The first surface may also be provided in place of the conformal mesh of Figs. 3A and 3B and angled sufficiently to allow the build material 44 to fall down the opposite surface 48 and onto the build area 12 to be distributed with the dosed amount 42. The cleaning portion may thus be part of a trough-shaped cleaning device 34, wherein the release portion is coupled to and arranged closer to the build area 12 than the cleaning portion such that the build material on the opposite surface 48 passes to the release portion and falls through the one or more larger perforations P2 and away from the cleaning device 34. The cleaning device may be configured to move with the roller and the cleaning surface may be in contact with the roller for at least some of the duration of the pass of the roller over the build area.

It should be understood that the illustrative arrangement of different sized perforations shown in Fig. 7 is not limiting. The larger perforations may be arranged in more than one row, for example in rows extending along the length of the hollow cylinder at two locations that are opposite one another about the axis of the hollow cylinder. In variants, the size of the larger apertures may be variable along the length of the mesh, or along the length of the cleaning device, so as to control the release of build material along the length of the cleaning device or mesh. For example, the build material on the opposite surface 48 may not be spread evenly along the cleaning device or mesh and the release perforations P2 may be larger or have an overall larger aperture area per unit area in a region where build material accumulates on the opposite surface 48. This may make it more efficient to maintain the opposite surface 48. Other arrangements of the release perforations P2 may allow the control of the amount per unit area that falls onto the build area 12, for example by improving or ensuring an even distribution of the amount falling onto the build area 12. Furthermore, in any of the variants described herein, the shape and orientation through the thickness of the cleaning portion and/or release portion, and/or orientation with respect to the axis of rotation of the perforations, may be any suitable shape and/or orientation.

In the variants of the cleaning device 34 described herein, the cleaning surface 46 and opposite surface 48 may be spaced apart at a substantially constant distance; in other words, the cleaning portion may be of a constant thickness. In other variants, the cleaning portion may be of variable thickness. The perforations comprised within the cleaning portion extend from a first opening within the cleaning surface to a second opening within the opposite surface, and in the examples shown the first and second openings may be of the same size, however this is not necessary. In variants, the second opening may be larger than the first opening. This may improve the ability of the build material to pass through the perforations P to the opposite surface 48 unimpeded. The perforations may extend through the cleaning portion in a direction substantially perpendicular to the cleaning surface 46. This may for example be the case for a simple metal wire or plastic mesh with rectangular first and second openings that are of the same size and shape. In other variants, the perforation length extending from the cleaning surface to the opposite surface of one or more of the perforations P may be longer than then smallest distance between the cleaning surface and the opposite surface. For example, the perforations may be angled so as to be closer aligned to a tangential direction of the roller surface when the cleaning portion is in contact with the roller surface. This may allow the build material to pass through the perforations more easily. In some variants of the cleaning device, the perforations may be formed by a mesh network, which may substantially be a two-dimensional network in which the perforations P are formed by a plurality of interconnected surface struts, wherein the thickness of the struts and their separation define an open area, which is the percent area per unit area not covered by a strut. In variants, the mesh network may be a three-dimensional network, in which in addition the cleaning surface 46 and the opposite surface 48 are connected by a plurality of stand-off struts that define the thickness of the cleaning portion. Such a network may be an open network that facilitates the easy removal of build material from the roller surface and allows the build material to fall back out of the 3D mesh network and onto the build area 12. In the variants described herein, the perforations P within the cleaning portion may present an open area of at least 30%, and preferably of 50% or more.

In any of the above variants, vibrating means may be provided to apply a vibrating movement to the cleaning device 34 along a direction parallel with and/or radial to the axis of rotation, so as to enhance flowing the build material collected on the opposite surface 48 away from or out of the cleaning device, onto the build area 12, or to a side of the build area such as a groove alongside the build area in the direction of distribution of the layers or into a receiving chamber 68 arranged beyond the end of the build area 12 in the direction of distribution. It will be appreciated that any of the variants of the cleaning device 34 disclosed herein may be used in either of the implementations shown in Fig. 1 or Fig. 2. Where the cleaning device 34 travels with the roller 32, the cleaning surface may be arranged to contact the roller surface continuously or intermittently, by either urging the cleaning surface against the roller surface continuously or periodically moving the cleaning surface away from the roller surface, for example to allow releasing the build material 44 that passed through the perforations P to the opposite surface 48.

In variants of the apparatus the build material may be dosed and distributed by a hopper preceding the roller, and wherein the roller is used to flatten the distributed build material so as to provide a layer of uniform thickness and density. In other words, the distribution may be carried out by the roller in combination with a hopper. Furthermore, the roller may be connected to an overhead reservoir of build material that releases build material ahead of the roller, such that the step of dosing build material to the work surface comprises dosing build material to the build area 12 while distributing it with the roller, such that the dosed amount is continuously supplied during the movement of the roller.

## Claims

1. An apparatus (1) for the layerwise manufacture of one or more 3D objects from particulate build material, wherein the apparatus (1) comprises a build area (12) within a work surface (8) and over which the one or more 3D objects are to be formed, wherein the build area (12) represents the surface of the topmost layer, the apparatus (1) comprising:
- a dosing device (60) configured to provide an amount of build material (44) to the work surface (8);
- a roller (32) configured to pass over the build area (12) while rotating about an axis of rotation to distribute the dosed amount (42) of the build material (44) over the build area (12) to form a layer, the axis of rotation being perpendicular to the direction of distribution; and
- a cleaning device (34) comprising a cleaning portion extending parallel to the axis of rotation,
**characterised in that**
the cleaning device (34) comprises a plurality of perforations (P) comprised at least within the cleaning portion, the perforations (P) extending from a cleaning surface (46) of the cleaning portion to an opposite surface (48) of the cleaning portion opposite the cleaning surface (46);
wherein the cleaning surface (46) is configured to at least intermittently engage against the roller surface while the roller (32) rotates, and wherein the perforations (P) are configured to allow build material (44) to pass from the roller (32) through the cleaning portion to the opposite surface (48) while the cleaning surface (46) is in engagement with the roller surface.

2. The apparatus of claim 1, wherein the perforations (P) comprised within the cleaning portion extend from a first opening within the cleaning surface (46) to a second opening within the opposite surface (48), and wherein the second opening is larger than the first opening.

3. The apparatus of claim 1 or claim 2, wherein the perforations (P) are formed by a mesh network, wherein the perforations (P) are formed by a plurality of interconnected surface struts, and optionally wherein the cleaning surface (46) and the opposite surface (48) are connected by a plurality of stand-off struts.

4. The apparatus of any preceding claim, wherein the cleaning surface (46) is configured to resiliently engage with the roller surface while the roller (32) rotates.

5. The apparatus of any preceding claim, wherein the cleaning surface (46) is configured to engage with the roller surface over part of the roller circumference.

6. The apparatus of any preceding claim, wherein the cleaning portion is adjacent and coupled to a release portion of the cleaning device (34), the release portion tilting downwards towards the build area (12) and being at least partially open towards the build area (12); wherein the cleaning portion and release portion are configured to be positioned upstream with respect to the roller surface along the direction of distribution, such that the build material (44) on the opposite surface (48) flows downwards towards the release portion, and from the release portion onto the build area (12) ahead of the roller (32), such that the build material (44) from the opposite surface (48) is distributed with the dosed amount (42).

7. The apparatus of any one of claims 1 to 5, wherein the cleaning device (34) comprises an elongate hollow cylinder, wherein the outer surface of the hollow cylinder comprises the cleaning surface (46) and the inner surface of the hollow cylinder comprises the opposite surface (48); and wherein the cleaning surface (46) is arranged to extend along the length of the roller (32).

8. The apparatus of any preceding claim, wherein the cleaning device (34) comprises perforations (P) of different sizes.

9. The apparatus of claim 8, wherein the one or more larger perforations (P) comprises one or more elongate slots (P2), wherein the direction of elongation extends substantially along the axis of rotation and wherein the release portion is arranged not to contact the roller surface.

10. The apparatus of any preceding claim, wherein the cleaning device (34) is configured to be moveable in correspondence with the roller (32) and wherein the cleaning surface (46) is in contact with the roller (32) for at least some of the duration of the pass of the roller (32) over the build area (12).

11. The apparatus of any preceding claim, wherein the work surface (8) comprises a receiving chamber (68) arranged to a side of the build area (12) and located at the end of the pass of the roller (32) to an end side of the build area (12) following distribution, wherein the cleaning device (34) is arranged above the receiving chamber (68) and wherein the roller (32) is configured to abut, while rotating, against the cleaning surface (46) at the end of its pass over the build area (12), and wherein the cleaning device (34) is configured to release the build material (44) on the opposite surface (48) into the receiving chamber (68).

12. A method of operation for an apparatus (1) for the layerwise manufacture of 3D objects from particulate build material (44) within a build area (12) comprised within a work surface (8), the apparatus (1) comprising a roller (32) and a cleaning device (34) comprising a cleaning portion, the method comprising:
- dosing an amount of build material (44) to the work surface (8);
- distributing the dosed amount (42) over the build area (12) by passing the roller (32) over the build area (12) while rotating the roller (32) about an axis of rotation perpendicular to the direction of distribution; and
- engaging a cleaning surface (46) extending parallel to the axis of rotation of the cleaning portion against the roller surface at least intermittently,
**characterised in that**
the cleaning portion comprises a plurality of perforations (P) extending from the cleaning surface (46) to an opposite surface (48) of the cleaning portion, wherein the perforations (P) allow build material (44) adhered to the roller surface to pass from the cleaning surface (46) to the opposite surface (48) so as to clean the roller surface.

13. The method of claim 12, further comprising passing the cleaning device (34) with the roller (32) over the build area (12), and, for at least some of the duration of the pass, engaging the cleaning surface (46) with the roller surface ahead of the roller (32).

14. The method of claim 13, wherein:
- the cleaning portion is part of an elongate hollow cylinder extending along the length of the roller, the method further comprising rotating the elongate hollow cylinder so as to agitate the build material (44) on the opposite surface (48) and to release the build material (44) on the opposite surface (48) through an open end of the hollow cylinder; or
- the cleaning portion is part of a trough-shaped cleaning device (34) comprising a release portion coupled to and closer to the build area (12) than the cleaning portion, wherein the release portion comprises one or more release openings; wherein the method comprises engaging the cleaning surface (46) against the roller surface upstream of the direction of distribution; and releasing the build material (44) from the opposite surface (48) through the one or more release openings onto the build area (12) ahead of the roller (32); and distributing the released build material (44) with the dosed amount (42).

15. The method of any one of claims 12 to 14, comprising engaging the cleaning surface (46) against the roller surface for the duration of the step of distributing the dosed amount (42) over the build area (12).

## Patentansprüche

1. Vorrichtung (1) zur schichtweisen Herstellung eines oder mehrerer 3D-Objekte aus Partikelbaumaterial, wobei die Vorrichtung (1) einen Baubereich (12) innerhalb einer Arbeitsoberfläche (8) umfasst und über dem das eine oder die mehreren 3D-Objekte gebildet werden sollen, wobei der Baubereich (12) die Oberfläche der obersten Schicht darstellt, wobei die Vorrichtung (1) umfasst:
- eine Dosiervorrichtung (60), die so konfiguriert ist, dass sie eine Baumaterialmenge (44) auf die Arbeitsoberfläche (8) aufbringt;
- eine Walze (32), die so konfiguriert ist, dass sie über den Baubereich (12) läuft, während sie sich um eine Drehachse dreht, um die dosierte Menge (42) des Baumaterials (44) über den Baubereich (12) zu verteilen, um eine Schicht zu bilden, wobei die Drehachse senkrecht zur Verteilungsrichtung steht; und
- eine Reinigungsvorrichtung (34) mit einem Reinigungsteil, das sich parallel zur Drehachse erstreckt,
**dadurch gekennzeichnet, dass**
die Reinigungsvorrichtung (34) eine Vielzahl von Perforationen (P) umfasst, die zumindest innerhalb des Reinigungsteils angeordnet sind, wobei sich die Perforationen (P) von einer Reinigungsoberfläche (46) des Reinigungsteils zu einer gegenüberliegenden Oberfläche (48) des Reinigungsteils gegenüber der Reinigungsoberfläche (46) erstrecken;
wobei die Reinigungsoberfläche (46) so konfiguriert ist, dass sie zumindest zeitweilig mit der Walzenoberfläche in Eingriff kommt, während sich die Walze (32) dreht, und wobei die Perforationen (P) so konfiguriert sind, dass sie es dem Baumaterial (44) ermöglichen, von der Walze (32) durch den Reinigungsteil zur gegenüberliegenden Oberfläche (48) zu gelangen, während die Reinigungsoberfläche (46) mit der Walzenoberfläche in Eingriff steht.

2. Die Vorrichtung nach Anspruch 1, wobei sich die im Reinigungsteil enthaltenen Perforationen (P) von einer ersten Öffnung innerhalb der Reinigungsoberfläche (46) zu einer zweiten Öffnung innerhalb der gegenüberliegenden Oberfläche (48) erstrecken und wobei die zweite Öffnung größer ist als die erste Öffnung.

3. Die Vorrichtung nach Anspruch 1 oder Anspruch 2, wobei die Perforationen (P) durch ein Maschennetzwerk gebildet sind, wobei die Perforationen (P) durch eine Vielzahl von miteinander verbundenen Oberflächenstreben gebildet sind, und optional wobei die Reinigungsoberfläche (46) und die gegenüberliegende Oberfläche (48) durch eine Vielzahl von Abstandsstreben verbunden sind.

4. Die Vorrichtung nach einem der vorstehenden Ansprüche, wobei die Reinigungsoberfläche (46) so konfiguriert ist, dass sie während der Drehung der Walze (32) elastisch mit der Walzenoberfläche in Eingriff kommt.

5. Die Vorrichtung nach einem der vorstehenden Ansprüche, wobei die Reinigungsoberfläche (46) so konfiguriert ist, dass sie über einen Teil des Walzenumfangs mit der Walzenoberfläche in Eingriff steht.

6. Die Vorrichtung nach einem der vorstehenden Ansprüche, wobei der Reinigungsteil an einen Freigabeteil der Reinigungsvorrichtung (34) angrenzt und mit diesem verbunden ist, wobei der Freigabeteil nach unten in Richtung des Baubereichs (12) geneigt ist und zumindest teilweise zum Baubereich (12) hin offen ist; wobei der Reinigungsteil und der Freigabeteil so konfiguriert sind, dass sie in Bezug auf die Walzenoberfläche entlang der Verteilungsrichtung stromaufwärts positioniert sind, so dass das Baumaterial (44) auf der gegenüberliegenden Oberfläche (48) nach unten in Richtung des Freigabeteils und vom Freigabeteil auf den Baubereich (12) vor der Walze (32) fließt, so dass das Baumaterial (44) von der gegenüberliegenden Oberfläche (48) mit der dosierten Menge (42) verteilt wird.

7. Die Vorrichtung nach einem der Ansprüche 1 bis 5, wobei die Reinigungsvorrichtung (34) einen länglichen Hohlzylinder umfasst, wobei die Außenoberfläche des Hohlzylinders die Reinigungsoberfläche (46) umfasst und die Innenoberfläche des Hohlzylinders die gegenüberliegende Oberfläche (48) umfasst; und wobei die Reinigungsoberfläche (46) so angeordnet ist, dass sie sich entlang der Länge der Walze (32) erstreckt.

8. Die Vorrichtung nach einem der vorstehenden Ansprüche, wobei die Reinigungsvorrichtung (34) Perforationen (P) unterschiedlicher Größe umfasst.

9. Die Vorrichtung nach Anspruch 8, wobei die eine oder mehreren größeren Perforationen (P) einen oder mehrere längliche Schlitze (P2) umfassen, wobei sich die Längsrichtung im Wesentlichen entlang der Drehachse erstreckt und wobei der Freigabeteil so angeordnet ist, dass es die Walzenoberfläche nicht berührt.

10. Die Vorrichtung nach einem der vorstehenden Ansprüche, wobei die Reinigungsvorrichtung (34) so konfiguriert ist, dass sie entsprechend der Walze (32) beweglich ist, und wobei die Reinigungsoberfläche (46) zumindest zeitweilig während der Dauer des Durchlaufs der Walze (32) über den Baubereich (12) mit der Walze (32) in Kontakt steht.

11. Die Vorrichtung nach einem der vorstehenden Ansprüche, wobei die Arbeitsoberfläche (8) eine Aufnahmekammer (68) umfasst, die an einer Seite des Baubereichs (12) angeordnet ist und sich am Ende des Durchgangs der Walze (32) zu einer Endseite des Baubereichs (12) nach der Verteilung befindet, wobei die Reinigungsvorrichtung (34) über der Aufnahmekammer (68) angeordnet ist und wobei die Walze (32) so konfiguriert ist, dass sie am Ende ihres Durchgangs über den Baubereich (12) drehend an der Reinigungsoberfläche (46) anliegt, und wobei die Reinigungsvorrichtung (34) so konfiguriert ist, dass sie das Baumaterial (44) auf der gegenüberliegenden Oberfläche (48) in die Aufnahmekammer (68) abgibt.

12. Das Verfahren zum Betrieb einer Vorrichtung (1) zur schichtweisen Herstellung von 3D-Objekten aus Partikelbaumaterial (44) innerhalb eines Baubereichs (12), der in einer Arbeitsoberfläche (8) enthalten ist, wobei die Vorrichtung (1) eine Walze (32) und eine Reinigungsvorrichtung (34) mit einem Reinigungsteil umfasst, wobei das Verfahren umfasst:
- Dosieren einer Baumaterialmenge (44) auf die Arbeitsoberfläche (8);
- Verteilen der dosierten Menge (42) über den Baubereich (12), indem die Walze (32) über den Baubereich (12) geführt wird, wobei die Walze (32) um eine zur Verteilungsrichtung senkrechte Drehachse gedreht wird; und
- zumindest zeitweiliges Ineingriffbringen einer parallel zur Drehachse des Reinigungsteils verlaufenden Reinigungsoberfläche (46) mit der Walzenoberfläche,
**dadurch gekennzeichnet, dass**
der Reinigungsteil eine Vielzahl von Perforationen (P) umfasst, die sich von der Reinigungsoberfläche (46) zu einer gegenüberliegenden Oberfläche (48) des Reinigungsteils erstrecken, wobei die Perforationen (P) es ermöglichen, dass an der Walzenoberfläche haftendes Baumaterial (44) von der Reinigungsoberfläche (46) zur gegenüberliegenden Oberfläche (48) gelangt, um die Walzenoberfläche zu reinigen.

13. Das Verfahren nach Anspruch 12, ferner umfassend Führen der Reinigungsvorrichtung (34) mit der Walze (32) über den Baubereich (12) und zumindest zeitweiliges Ineingriffbringen der Reinigungsoberfläche (46) mit der Walzenoberfläche vor der Walze (32) während der Dauer des Führens.

14. Das Verfahren nach Anspruch 13, wobei:
- der Reinigungsteil Teil eines länglichen Hohlzylinders ist, der sich entlang der Länge der Walze erstreckt, wobei das Verfahren ferner das Drehen des länglichen Hohlzylinders umfasst, um das Baumaterial (44) auf der gegenüberliegenden Oberfläche (48) zu bewegen und das Baumaterial (44) auf der gegenüberliegenden Oberfläche (48) durch ein offenes Ende des Hohlzylinders freizugeben; oder
- der Reinigungsteil Teil einer trogförmigen Reinigungsvorrichtung (34) ist, die einen Freigabeteil umfasst, der mit dem Baubereich (12) verbunden und näher an diesem angeordnet ist als der Reinigungsteil, wobei der Freigabeteil eine oder mehrere Freigabeöffnungen umfasst; wobei das Verfahren umfasst: Anlegen der Reinigungsoberfläche (46) an die Walzenoberfläche stromaufwärts der Verteilungsrichtung; und die Freigabe des Baumaterials (44) von der gegenüberliegenden Oberfläche (48) durch die eine oder mehreren Freigabeöffnungen auf den Baubereich (12) vor der Walze (32); und das Verteilen des freigegebenen Baumaterials (44) mit der dosierten Menge (42).

15. Das Verfahren nach einem der Ansprüche 12 bis 14, umfassend das Ineingriffbringen der Reinigungsoberfläche (46) mit der Walzenoberfläche für die Dauer des Schritts des Verteilens der dosierten Menge (42) über den Baubereich (12).

## Revendications

1. Appareil (1) de fabrication par couches d'un ou de plusieurs objets 3D à partir d'un matériau de construction à particules, l'appareil (1) comprenant une zone de construction (12) à l'intérieur d'une surface de travail (8) et par-dessus laquelle les un ou plusieurs objets 3D sont destinés à être formés, la zone de construction (12) représentant la surface de la couche la plus haute, l'appareil (1) comprenant :
- un dispositif de dosage (60) configuré pour fournir une quantité de matériau de construction (44) à la surface de travail (8) ;
- un rouleau (32) configuré pour passer par-dessus la zone de construction (12) tout en tournant autour d'un axe de rotation afin de distribuer la quantité dosée (42) du matériau de construction (44) par-dessus la surface de construction (12) pour former une couche, l'axe de rotation étant perpendiculaire à la direction de distribution ; et
- un dispositif de nettoyage (34) comprenant une portion de nettoyage qui s'étend en parallèle à l'axe de rotation, **caractérisé en ce que** le dispositif de nettoyage (34) comprend une pluralité de perforations (P) comprises au moins à l'intérieur de la portion de nettoyage, les perforations (P) s'étendant à partir d'une surface de nettoyage (46) de la portion de nettoyage jusqu'à une surface opposée (48) de la portion de nettoyage à l'opposé de la surface de nettoyage (46) ;
dans lequel la surface de nettoyage (46) est configurée pour au moins se mettre en prise de manière intermittente contre la surface du rouleau pendant que le rouleau (32) tourne, et dans lequel les perforations (P) sont configurées pour permettre au matériau de construction (44) de passer à partir du rouleau (32) à travers la portion de nettoyage jusqu'à la surface opposée (48) pendant que la surface de nettoyage (46) est en prise avec la surface du rouleau.

2. Appareil de la revendication 1, dans lequel les perforations (P) comprises à l'intérieur de la portion de nettoyage s'étendent à partir d'une première ouverture à l'intérieur de la surface de nettoyage (46) jusqu'à une deuxième ouverture à l'intérieur de la surface opposée (48), et dans lequel la deuxième ouverture est plus grande que la première ouverture.

3. Appareil de la revendication 1 ou de la revendication 2, dans lequel les perforations (P) sont formées par un réseau à mailles, dans lequel les perforations (P) sont formées par une pluralité d'entretoises de surface interconnectées, et facultativement dans lequel la surface de nettoyage (46) et la surface opposée (48) sont connectées par une pluralité d'entretoises d'écartement.

4. Appareil de n'importe quelle revendication précédente, dans lequel la surface de nettoyage (46) est configurée pour se mettre en prise de manière élastique avec la surface du rouleau pendant que le rouleau (32) tourne.

5. Appareil de n'importe quelle revendication précédente, dans lequel la surface de nettoyage (46) est configurée pour se mettre en prise avec la surface du rouleau sur une partie de la circonférence du rouleau.

6. Appareil de n'importe quelle revendication précédente, dans lequel la portion de nettoyage est adjacente à et couplée à une portion de libération du dispositif de nettoyage (34), la portion de libération s'inclinant vers le bas vers la zone de construction (12) et étant au moins partiellement ouverte vers la zone de construction (12) ; dans lequel la portion de nettoyage et la portion de libération sont configurées pour être positionnées en amont par rapport à la surface du rouleau le long de la direction de distribution, de telle sorte que le matériau de construction (44) sur la surface opposée (48) s'écoule vers le bas vers la portion de libération, et à partir de la portion de libération sur la zone de construction (12) devant le rouleau (32), de telle sorte que le matériau de construction (44) provenant de la surface opposée (48) soit distribué suivant la quantité dosée (42).

7. Appareil de n'importe laquelle des revendications 1 à 5, dans lequel le dispositif de nettoyage (34) comprend un cylindre creux allongé, dans lequel la surface externe du cylindre creux comprend la surface de nettoyage (46) et la surface interne du cylindre creux comprend la surface opposée (48) ; et dans lequel la surface de nettoyage (46) est agencée pour s'étendre le long de la longueur du rouleau (32).

8. Appareil de n'importe quelle revendication précédente, dans lequel le dispositif de nettoyage (34) comprend des perforations (P) de différentes tailles.

9. Appareil de la revendication 8, dans lequel les une ou plusieurs perforations plus grandes (P) comprennent une ou plusieurs fentes allongées (P2), dans lequel la direction d'élongation s'étend substantiellement le long de l'axe de rotation et dans lequel la portion de libération est agencée pour ne pas contacter la surface du rouleau.

10. Appareil de n'importe quelle revendication précédente, dans lequel le dispositif de nettoyage (34) est configuré pour être mobile en correspondance avec le rouleau (32) et dans lequel la surface de nettoyage (46) est en contact avec le rouleau (32) pendant au moins une certaine partie de la durée de passage du rouleau (32) par-dessus la zone de construction (12).

11. Appareil de n'importe quelle revendication précédente, dans lequel la surface de travail (8) comprend une chambre de réception (68) agencée sur un côté de la zone de construction (12) et située au niveau de l'extrémité du passage du rouleau (32) jusqu'à un côté d'extrémité de la zone de construction (12) à la suite d'une distribution, dans lequel le dispositif de nettoyage (34) est agencé au-dessus de la chambre de réception (68) et dans lequel le rouleau (32) est configuré pour buter, pendant la rotation, contre la surface de nettoyage (46) au niveau de l'extrémité de son passage par-dessus la zone de construction (12), et dans lequel le dispositif de nettoyage (34) est configuré pour libérer le matériau de construction (44) sur la surface opposée (48) dans la chambre de réception (68).

12. Procédé de fonctionnement pour un appareil (1) destiné à la fabrication par couches d'objets 3D à partir d'un matériau de construction à particules (44) à l'intérieur d'une zone de construction (12) comprise à l'intérieur d'une surface de travail (8), l'appareil (1) comprenant un rouleau (32) et un dispositif de nettoyage (34) comprenant une portion de nettoyage, le procédé comprenant les opérations consistant à :
- doser une quantité de matériau de construction (44) destiné à la surface de travail (8) ;
- distribuer la quantité dosée (42) par-dessus la zone de construction (12) en faisant passer le rouleau (32) par-dessus la zone de construction (12) pendant que le rouleau (32) tourne autour d'un axe de rotation perpendiculairement à la direction de distribution ; et
- mettre en prise une surface de nettoyage (46), s'étendant en parallèle à l'axe de rotation de la portion de nettoyage, contre la surface du rouleau au moins de manière intermittente, **caractérisé en ce que** la portion de nettoyage comprend une pluralité de perforations (P) qui s'étendent à partir de la surface de nettoyage (46) jusqu'à une surface opposée (48) de la portion de nettoyage, les perforations (P) permettant au matériau de construction (44) adhéré à la surface du rouleau de passer à partir de la surface de nettoyage (46) jusqu'à la surface opposée (48) de sorte à nettoyer la surface du rouleau.

13. Procédé de la revendication 12, comprenant en outre le passage du dispositif de nettoyage (34) avec le rouleau (32) par-dessus la zone de construction (12), et, pendant au moins une certaine partie de la durée du passage, la mise en prise de la surface de nettoyage (46) avec la surface du rouleau devant le rouleau (32).

14. Procédé de la revendication 13, dans lequel :
- la portion de nettoyage fait partie d'un cylindre creux allongé s'étendant le long de la longueur du rouleau, le procédé comprenant en outre la rotation du cylindre creux allongé de sorte à agiter le matériau de construction (44) sur la surface opposée (48) et à libérer le matériau de construction (44) sur la surface opposée (48) à travers une extrémité ouverte du cylindre creux ; ou
- la portion de nettoyage fait partie d'un dispositif de nettoyage en forme de cuvette (34) comprenant une portion de libération couplée à et plus proche de la zone de construction (12) que la portion de nettoyage, dans lequel la portion de libération comprend une ou plusieurs ouvertures de libération ; le procédé comprenant la mise en prise de la surface de nettoyage (46) contre la surface du rouleur en amont de la direction de distribution ; et la libération du matériau de construction (44) à partir de la surface opposée (48) à travers les une ou plusieurs ouvertures de libération sur la zone de construction (12) devant le rouleau (32) ; et la distribution du matériau de construction libéré (44) suivant la quantité dosée (42).

15. Procédé de n'importe laquelle des revendications 12 à 14, comprenant la mise en prise de la surface de nettoyage (46) contre la surface du rouleau pendant la durée de l'étape de distribution de la quantité dosée (42) par-dessus la zone de construction (12).
